# EUROPEAN PATENT APPLICATION

(11) **EP 1 372 287 A1**
(43) Date of publication of application: **17.12.2003**
(21) Application number: 02705291.9
(22) Date of filing: 18.03.2002
(51) Int. Cl.: H04H 7/00, H04N 7/08

(54) **BROADCAST TRANSMISSION APPARATUS**

(30) Priority: 19.03.2001 JP 2001077392
(71) Applicant: MATSUSHITA ELECTRIC INDUSTRIAL CO., LTD., Kadoma-shi, Osaka 571-8501 (JP)
(72) Inventor: FUJITA, Mitsuko, Meguro-ku, Tokyo 153-0061 (JP); YOSHIKAWA, Masaaki, Shinjuku-ku, Tokyo 160-0023 (JP); TAKEUCHI, Yoshiyasu, Yokohama-shi, Kanagawa 234-0056 (JP); IINO, Daisuke, Matsudo-shi, Chiba 271-0045 (JP); ISHIBASHI, Hiroyoshi, Yokohama-shi, Kanagawa 234-0055 (JP)
(74) Representative: Grünecker, Kinkeldey, Stockmair & Schwanhäusser Anwaltssozietät
(86) International application number: JP0202543
(87) International publication number: WO02078225

(57) **Abstract**

In a broadcast transmitting apparatus creating and sending program control information, a method is achieved for creating and transmitting program control information common among stations sharing programs. To achieve this, the broadcast transmitting apparatus is provided with program information section creating means for creating program information sections from program information of sharing stations sharing programs, program information section sending means for repeatedly sending program information sections to create a program information stream, replacement program information section creating means for creating replacement program information sections from program information of one or plural programs to replace of sharing stations, and program information stream replacing means for creating a replacement program information stream in which program information sections for one or plural programs to be replaced in the program information stream are replaced by the replacement program information sections. By creating a program information stream and a replacement program information stream, program control information can be shared among sharing stations.

## Description

### Technical Field

The present invention relates to a broadcast transmitting apparatus used in a program broadcasting system that creates and transmits program control information multiplexed and transmitted synchronously with information constituting programs such as images and sounds, and more particularly to a broadcast transmitting apparatus for creating and transmitting program control information common to stations sharing programs.

### Background of the Invention

Recently, with the development of communication technologies and data processing technologies, multimedia information such as audio information and visual information is becoming digitized for presentation to users.

In digital broadcasting, when broadcasting a program, a broadcast station sends, in addition to images, sounds, and data, program control information for controlling the information by a receiver. The program control information includes information pointing to information constituting the program such as images and sounds, as well as program guidance information. Therefore, it must be sent synchronously with a corresponding program. An example of a program information creating apparatus that creates and sends the program control information is "control information creating apparatus of a broadcasting system" disclosed in Japanese Published Unexamined Patent Application No. Hei 11-252516 as a prior art already proposed.

The prior art periodically checks program schedule information for changes to thereby detect changes and create change differences within a sending range each time.

However, in the above described program broadcasting system, when programs shared among sharing stations are broadcast, it has been difficult to share among the sharing stations the program control information transmitted along with the respective broadcast programs.

### Disclosure of the Invention

The present invention has been made in view of the above described problems and an object thereof is to make it possible to create and send program control information common to plural broadcast stations sharing broadcast programs by providing the sharing broadcast stations with means for presenting the program control information to each other.

A second object of the present invention is to provide a broadcast transmitting apparatus that can send program control information common to plural broadcast stations sharing with each other in real time even if the program is being broadcast.

To solve the above described problems, a broadcast transmitting apparatus of the present invention comprises program information creating means for creating program information sections from program information of programs of its own station, and program information stream replacing means for creating a replacement program information stream in which, of the program information sections, program information sections corresponding to one or plural programs to be replaced are replaced by corresponding program information sections in one or plural program information streams sent from sharing stations. With this construction, by creating a replacement program information stream in which some program information sections of program information streams sent from sharing stations are replaced by program information sections created from other program information, program control information can be shared among the sharing stations.

The present invention, as a first aspect, creates a replacement program information stream in which some of program information sections of its own station is replaced by replacement program information sections extracted from program information streams from sharing stations. Accordingly, program control information can be shared among sharing stations.

The present invention, as a second aspect, receives program information streams from sharing stations to extract replacement program information sections for replacement. Accordingly, transmission and reception can be made in the same stream format as image data and sound data, and program information sections can be edited in detail.

The present invention, as a third aspect, receives program information streams from sharing stations to replace the contents of program information packets constituting the program information streams. Accordingly, transmission and reception can be made in the same stream format as image data and sound data, and program information sections can be edited quickly.

The present invention, as a fourth aspect, receives program information sections from other sharing stations to make replacement. Accordingly, program information sections can be transmitted in advance and only changed program information sections can be transmitted, with the result that more time can be allocated to the editing of program information sections.

The present invention, as a fifth aspect, creates and distributes program information sections for local programs created independently in each sharing station in one or plural stations. Accordingly, program information sections for local programs can be collectively created in a base station and the like, other sharing stations can create program information sections with minimum operation and minimum facilities, and space saving and cost reduction can be achieved.

The present invention, as a sixth aspect, replaces program information sections or program information packets according to a switching signal. Accordingly, for switching of local programs among sharing stations, program information sections or program information packets can be switched quickly.

The present invention, as a seventh aspect, creates program information sections or program information packets so as to conform to attributes specific to each sharing station. Accordingly, program information streams corresponding to the respective specific station facilities of sharing stations can be created.

The above described objects and advantages of the present invention will become more obvious from the following embodiments described with reference to the accompanying drawings.

### Brief Description of the Drawings

FIG. 1 is a diagram showing the configuration of a broadcast transmitting apparatus according to a first embodiment of the present invention;
FIG. 2 is a diagram showing an example of a program information section created by program information section creating means in the first embodiment of the present invention;
FIG. 3 is a block diagram showing a basic configuration of a broadcast transmitting apparatus according to a second embodiment of the present invention;
FIG. 4 is a flowchart for explaining replacement of a program information stream of another station in the second embodiment by a program information stream for its own station;
FIG. 5 is a block diagram showing a basic configuration of a broadcast transmitting apparatus according to a third embodiment of the present invention;
FIG. 6 is a flowchart for explaining replacement of a program information stream of another station in the third embodiment by a program information stream for its own station;
FIG. 7 is a diagram showing a service ID correspondence table with correspondence between IDs of other stations and its own station, used when a program information section of a broadcast transmitting apparatus of the present invention is replaced; and
FIG. 8 is a diagram showing a service ID correspondence table with correspondence between IDs of other stations and its own station, used when a program information section of a broadcast transmitting apparatus of the present invention is replaced.

### Best Mode for Carrying out the Invention

Hereinafter, preferred embodiments of a broadcast transmitting apparatus of the present invention will be described in detail with reference to the accompanying drawings . The present invention is not limited to these embodiments and may be implemented in various ways without departing from the sprit and scope of the invention.

### (First embodiment)

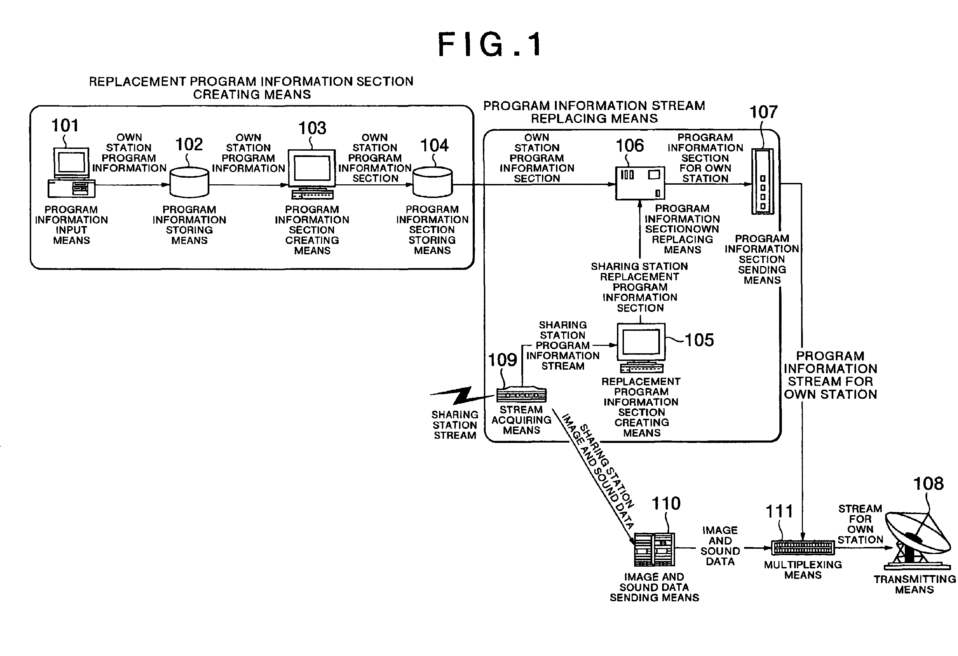

FIG. 1 is a block diagram showing the configuration of a program broadcasting system using a broadcast transmitting apparatus according to a first embodiment of the present invention. In FIG. 1, a reference numeral 101 denotes program information inputting means for inputting broadcast programs. A reference numeral 102 denotes program information storing means for storing and managing program information. A reference numeral 103 denotes program information section creating means for creating a program information section of its own station. A reference numeral 104 denotes program information section storing means for storing and managing program information sections. A reference numeral 109 denotes stream acquiring means for acquiring a stream into which program image data and sound data, and program information are multiplexed, from other sharing stations (hereinafter referred to as other stations). A reference numeral 105 denotes replacement program information section creating means for extracting a replacement program information section from a stream acquired from the stream acquiring means 109. Program replacement between sharing stations is made such that one or more programs of its own station is replaced by one or more programs of other stations. A reference numeral 106 denotes program information section replacing means for replacing a program information section of its own station created by the program information section creating means 103. A reference numeral 107 denotes program information section sending means for repeatedly sending program information sections to create a program information stream. A reference numeral 108 denotes transmitting means such as a satellite antenna for transmitting program information streams. A reference numeral 110 denotes a image and sound data sending means for sending program image data and sound data. A reference numeral 111 denotes multiplexing means for multiplexing image data and sound data for sending.

A description will be made of the operation of a program broadcasting system in this embodiment, configured as described above. Program information of its own station is inputted from the program information inputting means 101 and stored and managed by the program information storing means 102, and a program information section of its own station is created by the program information section creating means 103 and stored and managed by the program information section storing means 104.

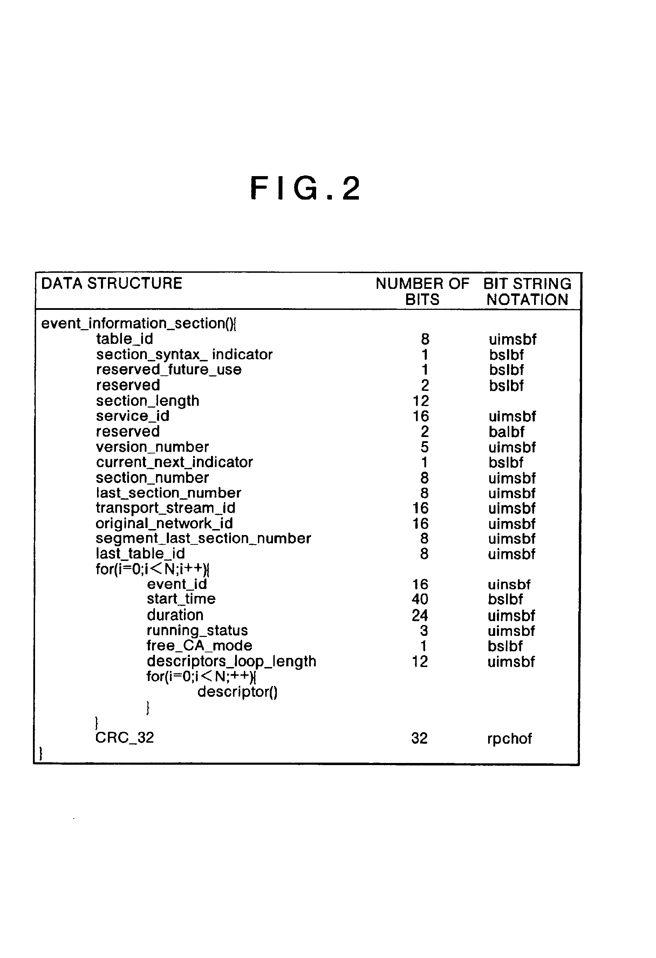

The term"section" of a program information section refers to a syntax structure used for mapping into a transport stream packet. An example of a program information section created by the program information section creating means 103 is shown in FIG. 2. In the program information section, table_id contains the identifier of a program information data table related to the program information section. For EIT (event information table), an identifier indicating a program information section is written. section_syntax_indicator is data indicating section syntax. section_length is data indicating the data length of a section. This defines the number of bytes of a section from immediately after a section length field to the end of the section. service_id is data indicating service identification. This serves as a label for identifying the service from other services within the transport stream. event_id is an event ID that indicates program identification and is uniquely afforded for each program within service. start_times indicates start time of a program having the event_id. duration_times indicates duration time of a program having the event_id.

On the other hand, the replacement program information section creating means 105 receives program information streams multiplexed with program image data and sound data from sharing stations by the stream acquiring means 109, isolates the image data and sound data from each other to obtain program information streams, and for some program information sections of the program information streams of the sharing stations, creates replacement program information sections of the sharing stations for its own station. In the program information section replacing means 106, a program information section of its own station stored and managed by the program information section storing means 104 is replaced by a replacement program information section of a sharing station created by the replacement program information section creating means 105 for use as a program information section for its own station. The program information section sending means 107 repeatedly sends program information sections for its own station to create a program information stream for its own station. The multiplexing means 111 multiplexes the program information stream for its own station, and image data and sound data sent from the image and sound data sending means 110 into a stream for its own station and transmits the stream by the transmitting means 108.

Although, in this embodiment, a program information stream is multiplexed with image data and sound data before being distributed, the present invention is not limited to this. For example, a program information stream and a stream of image data and sound data may be separately received and distributed, with the same effect.

### (Second embodiment)

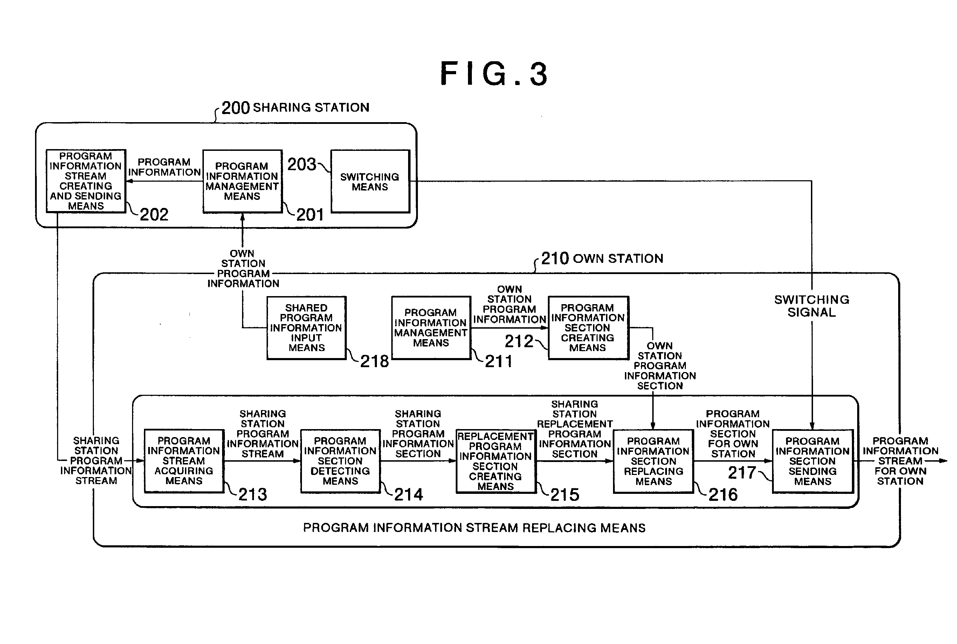

A description is made of the configuration and operation of the broadcast transmitting apparatus of the present invention in which a program information section of its own station is replaced by a replacement program information section of a sharing station. FIG. 3 is a block diagram showing a basic configuration of a program broadcasting system using a broadcast transmitting apparatus according to a second embodiment of the present invention. The program broadcasting system in this embodiment comprises a broadcast transmitting apparatus 200 of a partner station to share with, that is, another station, and a broadcast transmitting apparatus 210 of its own station.

In the broadcast transmitting apparatus 200 of another station in FIG. 3, a reference numeral 201 denotes program information management means for managing program information of other stations. A reference numeral 202 denotes program information stream creating and sending means for creating a program information stream from program information of other stations and sending it. A reference numeral 203 denotes switching means for notifying a broadcast transmitting apparatus 201 of a partner to share with of program switching.

In a broadcast transmitting apparatus 210 of its own station in FIG. 3, a reference numeral 211 denotes program information management means for managing program information of its own station. A reference numeral 212 denotes program information section creating means for creating a program information section of its own station from program information of its own station. A reference numeral 213 denotes program information stream acquiring means for acquiring a program information stream of another station from the another station. A reference numeral 214 denotes program information section detecting means for detecting (extracting) changed program information sections from program information streams of other stations. A reference numeral 215 denotes replacement program information section creating means for creating replacement program information sections of other stations. A reference numeral 216 denotes program information section replacing means in which a program information section of its own station is replaced by a replacement program information section of another station for use as a program information section for its own station. A reference numeral 217 denotes program information section sending means for repeatedly sending program information sections for its own station to create a program information stream for its own station. A reference numeral 218 denotes shared program information input means for inputting program information of its own station to the program information management means 201 of another station.

In addition to the above described components, image and sound sending means for sending program images and sounds, multiplexing means for multiplexing and sending program images and sounds and program information streams, and other means are required. These components are not described here because they are not the main of this embodiment.

A description is made of the operation of sending a program information stream of another station from the broadcast transmitting apparatus 200 of the another station. In the broadcast transmitting apparatus 200 of the another station, the program information stream creating and sending means 202 creates a program information stream of another station from program information managed in the program information management means 201 and sends it. Moreover, in the program broadcasting system in this embodiment, program information of its own station is inputted to the program information management means 201 of another station from the shared program information input means 218 of the broadcast transmitting apparatus 210 of its own station, and sent as a program information stream of another station by the program information stream creating and sending means 202.

Next, a description is made of the operation of creating a program information section of its own station. In the broadcast transmitting apparatus 210 of its own station, a program information section of its own station is created from program information of its own station managed in the program information management means 211 by the program information section creating means 212.

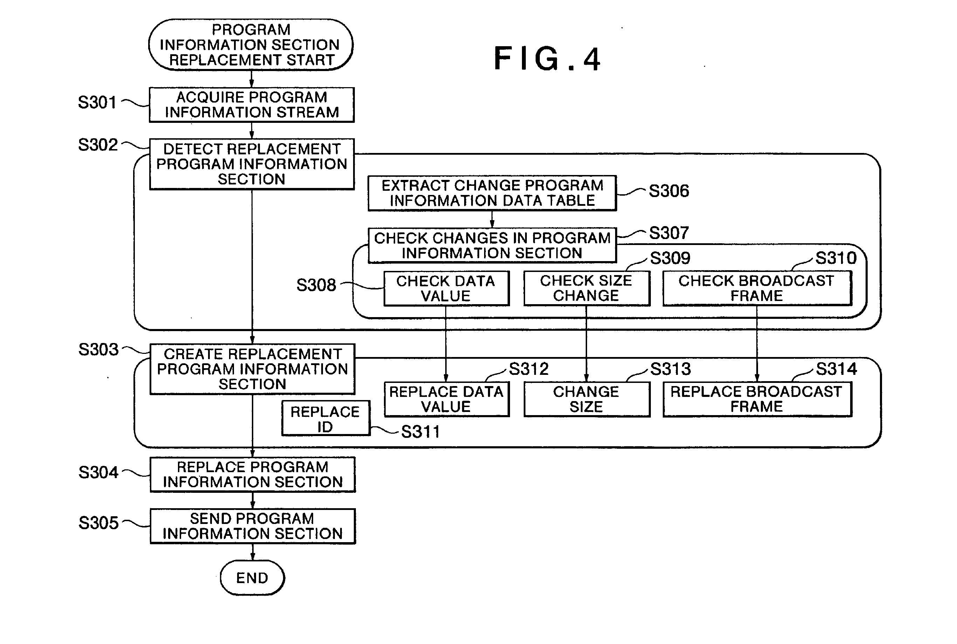

Next, a description is made of the operation in which a program information stream of another station is replaced by a program information stream for its own station. FIG. 4 is a flowchart for explaining the operation in which a program information stream of another station in this embodiment is replaced by a program information stream for its own station. As shown in this flowchart, the broadcast transmitting apparatus 210 of its own station performs the following plural stages of operation.

### (1) Acquiring a program information stream of another station (S301)

The program information stream acquiring means 213 receives a program information stream of another station sent from the another station.

### (2) Detecting replacement program information section (S302)

The program information section detecting means 214 isolates multiplexed AV data from the program information stream to detect a program information section, detects program information ID from header information of the program information section, and detects a changed program information section by processing of the following S306 and S307.

### - Extracting a changed program information data table (S306)

A version number is detected from the header of the program information section and a program information data table whose version number is updated is extracted.

### - Checking whether the contents of program information section are changed (S307)

Program information managed by the program information management means 211 that matches ID of the extracted program information data table is extracted to check whether the contents of the program information section are changed. In the check processing, processing of the following (a), (b), and (c) is performed.

### a) Checking data values of program information section (S308)

A check is made to see if data values of the program information section are identical with data values of the program information managed by the program information management means 211.

### b) Checking data size of program information section (S309)

A check is made to see if the byte size of data of the program information section are identical with the byte size of data of the program information managed by the program information management means 211.

### c) Checking broadcast frame (S310)

A check is made to see if the broadcast frame of start_time (broadcast time) and duration (broadcast duration) of EIT of a program information table of the program information section is changed.

### (3) Creating replacement program information section (S303)

The replacement program information section creating means 215 customizes a changed program information section of another station to suit its own station according to program information managed by the program information management means 211. That is, to create a replacement program information section, processing of S311, S312, S313, and S314 described below is performed.

Particularly, a broadcast transmitting apparatus to create program information sections conforming to attributes specific to each sharing station (its own station in this case) checks whether the re-created program information section conforms to attributes of its own station in terms of data consistency and size.

### - Replacing ID (S311)

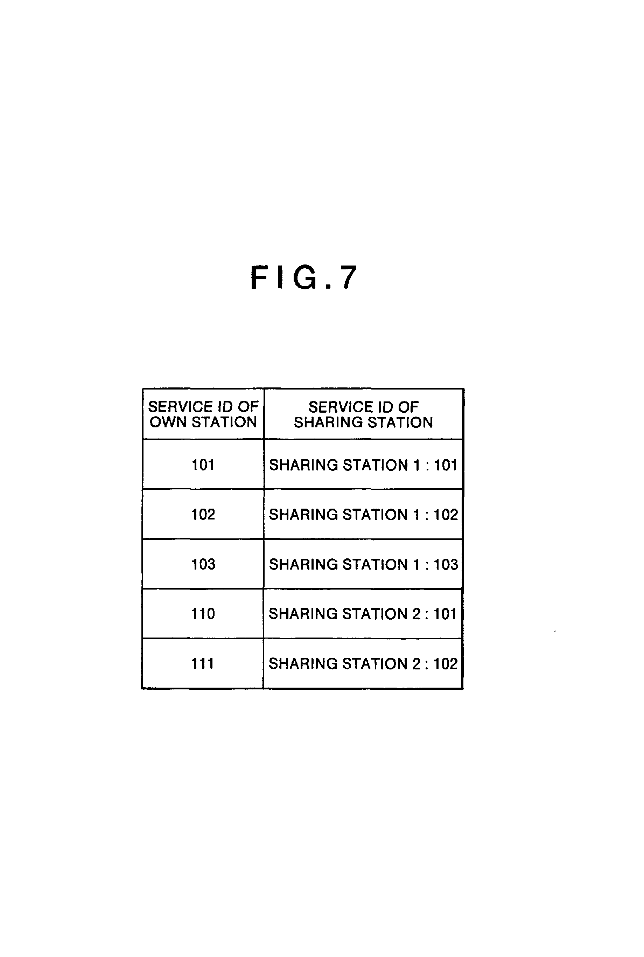

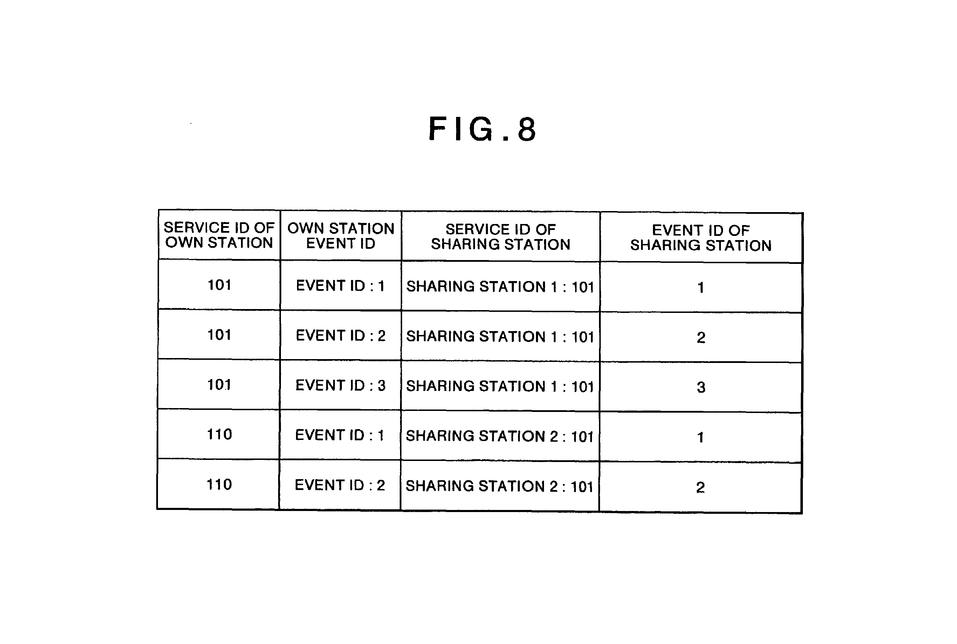

Service ID, event ID, and other IDs specific to each station are changed to IDs for its own station according to an identifier correspondence table (FIGS. 7 and 8) to re-create a program information section. Herein, the service ID denotes a channel number and the event ID denotes the identification of each program.

Particularly, a broadcast transmitting apparatus to create program information sections conforming to attributes specific to each sharing station checks the re-created program information section for relationships between ID data and confirms that it conforms to attributes of its own station in terms of data consistency.

### - Replacing data values of program information section (S312)

If data values of the program information section such as flag values have been changed, data values of the program information section of another station are changed according to program information of the program information management means 211 to re-create a program information section.

Particularly, a broadcast transmitting apparatus to create program information sections conforming to attributes specific to each sharing station checks the re-created program information section for the range of flag values and the like and confirms that it conforms to attributes of its own station in terms of consistency and size.

### - Changing byte size (S313)

If character string information such as a program name and other names, and summary information giving a summary of program has been changed, data values of the program information section are changed according to program information managed in the program information management means to re-create a program information section.

Particularly, a broadcast transmitting apparatus to create program information sections conforming to attributes specific to each sharing station checks the re-created program information section to see if size and the like exceed limited bands of its own station and confirms that the size of the program information section conforms to attributes of its own station.

### - Replacing broadcast frame (S314)

If a broadcast frame of EIT of a program information of the program information section has been changed, a broadcast frame of the program information section is changed according to program information managed in the program information management means 211 to re-create a program information section.

Particularly, a broadcast transmitting apparatus to create program information sections conforming to attributes specific to each sharing station checks the re-created program information section for the range of flag values and the like and confirms that consistency, size, and the like conform to attributes of its own station. It also checks to see if size and the like exceed limited bands of its own station, and confirms that the size of the program information section conforms to attributes of its own station.

### (4) Replacing program information section (S304)

In the program information section replacing means 216, a program information section of its own station created by the program information section creating means 212 is replaced by a replacement program information section of another station created by the replacement program information section creating means 215, for using as a program information section for its own station.

Particularly, a broadcast transmitting apparatus having replacing means specifying a planned broadcast time specifies a planned program broadcast time or broadcast start time to extract a relevant program, and replaces program information sections constituting the program.

Particularly, a broadcast transmitting apparatus having replacing means specifying program identifiers specifies service ID and event ID as program identifiers to extract a relevant program, and replaces program information sections constituting the program.

### (5) Sending program information sections (S305)

The program information section sending means 217 repeatedly sends program information sections for its own station created by the program information section replacing means 216 to create and send a program information stream for its own station.

Particularly, in a broadcast transmitting apparatus having switching means 203 for replacing program information sections, program information sections of its own station is replaced by replacement program information sections of another station by the program information section replacing means 216, and the replaced program information sections is sent.

Of the above operations, schedule replacement is made for schedule EIT, which is schedule information arranged in time-series order, or pfEIT (pf: present following: EIT : Event Information Table), which is time-series information on present and following programs. The broadcast transmitting apparatus of the present invention performs the above operations for one or both of streams on present or following programs, particularly for pfEIT. The broadcast transmitting apparatus of the present invention, particularly for schedule EIT, receives not program information sections but program information sections from other stations, and performs the above operations.

### (Third embodiment)

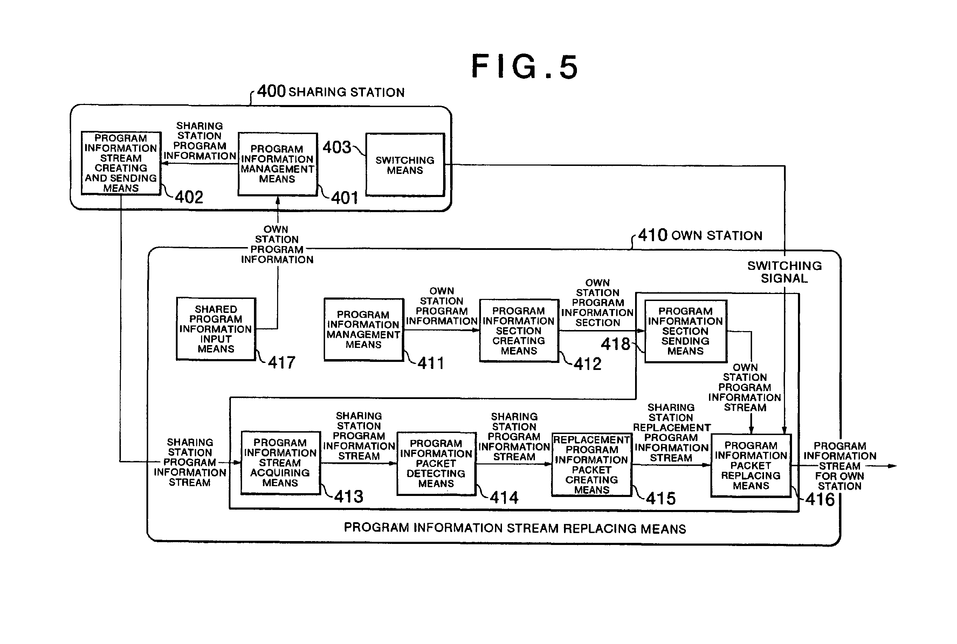

FIG. 5 is a block diagram showing a basic configuration of a program broadcasting system using a broadcast transmitting apparatus according to a third embodiment of the present invention. The program broadcasting system in this embodiment comprises a broadcast transmitting apparatus 400 of a partner station to share with, that is, another station, and a broadcast transmitting apparatus 410 of its own station.

In the broadcast transmitting apparatus 400 of another station in FIG. 5, a reference numeral 401 denotes program information management means for managing program information of other stations. A reference numeral 402 denotes program information stream creating and sending means for creating a program information stream from program information of other stations and sending it. A reference numeral 403 denotes switching means for notifying a broadcast transmitting apparatus 401 of a partner to share with of program switching.

In a broadcast transmitting apparatus 410 of its own station, a reference numeral 411 denotes program information management means for managing program information of its own station. A reference numeral 412 denotes program information section creating means for creating a program information section of its own station from program information of its own station. A reference numeral 413 denotes program information stream acquiring means for acquiring a program information stream of another station from the another station. A reference numeral 414 denotes program information packet detecting means for detecting changed program information packets from program information streams of other stations. A reference numeral 415 denotes replacement program information packet creating means for creating replacement program information packets of other stations. A reference numeral 416 denotes program information packet replacing means in which a program information packet of its own station is replaced by a replacement program information packet of another station for use as a program information packet for its own station. A reference numeral 417 denotes shared program information input means for inputting program information of its own station to other stations.

In addition to the above described components, image and sound sending means for sending program images and sounds, multiplexing means for multiplexing and sending program images and sounds and program information streams, and other means are required. These components are not described here because they are not the main of this embodiment.

A description is made of the operation of sending a program information stream of another station. In the program stream sending operation, in the broadcast transmitting apparatus 400 of another station, the program information stream creating and sending means 402 creates a program information stream of another station from program information managed in the program information management means 401 and sends it. Moreover, a broadcast transmitting apparatus having shared program information input means for inputting program information to the sharing station inputs program information of its own station to the program information management means 401 of another station from the shared program information input means 417 of the broadcast transmitting apparatus 410 of its own station, creates program information sections to be shared by a group of one or plural stations by the program information stream creating and sending means 402, and sends the grouped program information sections as a program information stream of another station.

Next, a description is made of the operation of creating a program information section of its own station. In the broadcast transmitting apparatus 410 of its own station, a program information section of its own station is created from program information of its own station managed in the program information management means 411 by the program information section creating means 412.

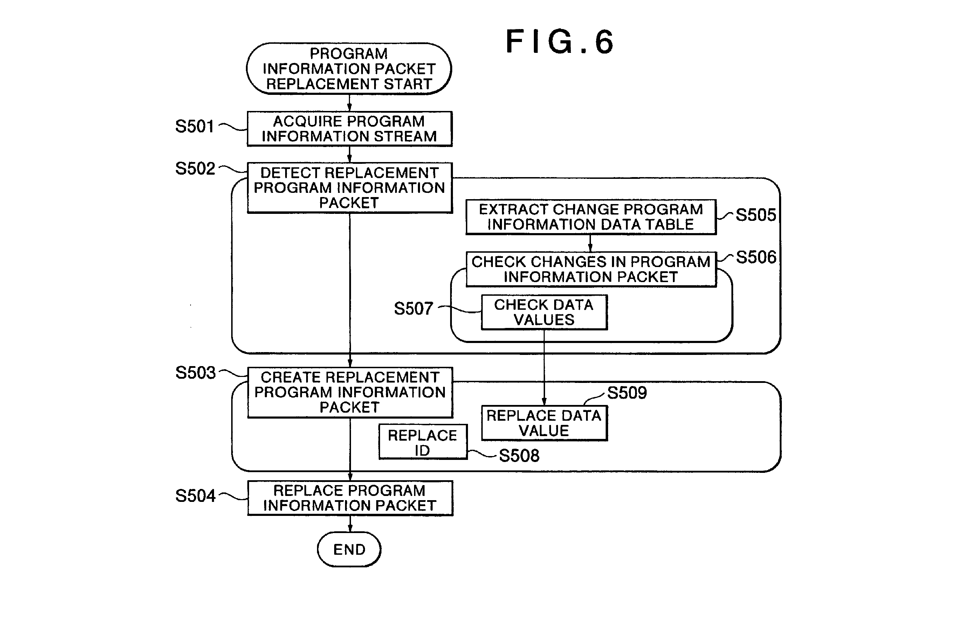

Next, a description is made of the operation in which a program information stream of another station is replaced by a program information stream for its own station. FIG. 6 is a flowchart for explaining the operation in which a program information stream of another station in this embodiment is replaced by a program information stream for its own station.

In the broadcast transmitting apparatus 410 of its own station,

### (1) Acquiring a program information stream of another station (S501)

The program information stream acquiring means 413 receives a program information stream of another station sent from the another station.

### (2) Detecting replacement program information packet (S502)

The program information packet detecting means 414 detects a program information packet from the program information stream, detects program information ID from header information of the program information packet, and detects a changed program information packet.

### - Extracting a changed program information data table (S505)

A version number is detected from the header of the program information section and a program information data table whose version number is updated is extracted.

### - Checking whether the contents of program information packet are changed (S506)

Program information managed by the program information management means 411 that matches ID of the extracted program information data table is extracted to check whether the contents of the program information packet are changed.

### a) Checking data values of program information packet (S507)

A check is made to see if data values of the program information packet are identical with data values of the program information managed by the program information management means 411.

### (3) Creating replacement program information packet (S503)

The replacement program information section creating means 415 customizes a changed program information packet of another station to suit its own station according to program information managed by the program information management means 411.

Particularly, a broadcast transmitting apparatus to create program information sections conforming to attributes specific to each sharing station checks whether the re-created program information section conforms to attributes of its own station in terms of data consistency and size.

### - Replacing ID (S508)

FIGS. 7 and 8 are diagrams showing a table with correspondence between IDs of other stations and its own station. Service ID, event ID, and other IDs specific to each station are changed to IDs for its own station according to an identifier correspondence table (FIGS. 7 and 8) to re-create a program information packet.

Particularly, a broadcast transmitting apparatus to create program information sections conforming to attributes specific to each sharing station checks the re-created program information section for relationships between ID data and confirms that it conforms to attributes of its own station in terms of consistency.

### - Replacing data values of program information section (S509)

If data values of the program information section such as flag values have been changed, data values of the program information section of another station are changed according to program information of the program information management means 411 to re-create a program information packet.

Particularly, a broadcast transmitting apparatus to create program information sections conforming to attributes specific to each sharing station checks the re-created program information section for the range of flag values and the like and confirms that it conforms to attributes of its own station in terms of consistency and size.

### (4) Replacing program information packet (S504)

The program information section replacing means 416 carries out replacement of program information packets of a program information stream of its own station sent by the program information section sending means 418 with replacement program information packets of another station created by the replacement program information packet creating means 415, and uses it as a program information stream for its own station. Particularly, in a broadcast transmitting apparatus having switching means for sending a switching signal to sharing stations to replace program information packets, program information packets of its own station are replaced by replacement program information packets of the other stations by the program information packet replacing means 416, and the replaced program information packets are sent.

Particularly, a broadcast transmitting apparatus having replacing means specifying a planned broadcast time specifies a planned program broadcast time or broadcast start time to extract a relevant program, and replaces program information packets constituting the program.

Particularly, a broadcast transmitting apparatus having replacing means specifying program identifiers specifies service ID and event ID as program identifiers to extract a relevant program, and replaces program information packets constituting the program.

The above operations particularly make replacement for pfEIT. The broadcast transmitting apparatus of the present invention performs the above operations for one or both of streams on present or following programs, particularly for pfEIT.

Although, in this embodiment, targets to be replaced as program information sections and program information packets are primarily EIT of a program information table, the present invention, without being limited to this, may also apply to other information tables such as NIT (Network Information Table), SDT (Service Description Table), BIT (Broadcast Information Table), and BAT (Bouquest Association Table).

Although, in this embodiment, information is received from other stations in the format of program information stream or program information section, the present invention, without being limited to this, may also receive information in the format of file.

Although, in this embodiment, program information streams or program information sections are distributed from the same other stations which send related AV data, without being limited to this, they may also be distributed from sharing stations which are different from those that send related AV data.

Although, in this embodiment, the number of partner stations to share with is one, without being limited to this, program information streams or program information sections may also be received from plural sharing stations.

In this embodiment, a broadcast transmitting apparatus having switching means in which program information sections or program information packets of its own station is replaced by replacement program information sections or replacement program information packets of another station transmits a switching signal from the another station. However, without being limited to this, replacement may also be made according to a switching signal from a local station.

In this embodiment, a broadcast transmitting apparatus to create program information sections or program information packets conforming to attributes specific to each sharing station makes replacement according to an identifier correspondence table. However, without being limited to this, replacement may also be made according to, e.g., configuration information.

As has been described above, in this embodiment, by creating a program information stream created by repeatedly sending program information sections and a program information stream created by the replacement of some program information sections of the program information stream with program information sections created from other program information, program control information can be shared among sharing stations, providing great practical effects.

Furthermore, in this embodiment, a program information stream is received from another station to detect and replace replacement program information sections, whereby transmission and reception is made in the same stream format as image data and sound data and program information sections can be edited in detail, providing great practical effects.

Furthermore, in this embodiment, a program information stream is received from another station to replace the contents of program information packets constituting the program information stream, whereby transmission and reception is made in the same stream format as image data and sound data, and program information sections can be edited quickly, providing great practical effects.

Furthermore, in this embodiment, program information sections are received from another station for replacement, whereby the program information sections can be transmitted in advance and only changed program information sections can be transmitted, so that more time can be allocated to the editing of the program information sections, providing great practical effects.

Furthermore, in this embodiment, program information sections to be shared are created and distributed by a group of one or plural stations, whereby program information sections can be collectively created by a base station and the like, so that other sharing stations can create program information sections with minimum operation and minimum facilities, and space saving and cost reduction can be achieved, providing great practical effects.

Furthermore, in this embodiment, when program broadcast time is changed, program information sections are replaced according to a switching signal, whereby, for change of program broadcast time among sharing stations, program information sections can be switched quickly, providing great practical effects.

Furthermore, in this embodiment, a check is made to see if program information sections conform to attributes of its own station in terms of data consistency and size, whereby program information streams corresponding to the respective specific station facilities of sharing stations can be created, providing great practical effects.

Although the present invention has been described based on preferred embodiments shown in the accompanying drawings, it is obvious to those skilled in the art that it can be easily changed or modified without departing from the spirit thereof. The present invention also includes such modifications.

## Claims

1. A broadcast transmitting apparatus comprising:
program information section creating means for creating program information sections from program information of programs of its own station; and
program information stream replacing means for creating a replacement program information stream in which, of the program information sections, program information sections corresponding to one or plural programs to be replaced are replaced by corresponding program information sections in one or plural program information streams from sharing stations.

2. The broadcast transmitting apparatus according to claim 1, wherein the program information stream replacing means receives a program information stream multiplexed with program image data and sound data from the sharing stations, and replaces some program information sections in the program information stream separately from the image data and sound data.

3. The broadcast transmitting apparatus according to claim 1, wherein the program information sections are EIT of a program information table including information about a program such as a program name, broadcast date, and program contents.

4. The broadcast transmitting apparatus according to claim 1, wherein the program information stream replacing means comprises:
program information stream acquiring means for receiving a program information stream from other sharing stations;
program information section detecting means for extracting program information sections of programs for replacing from the program information stream acquired by the program information stream acquiring means;
replacement program information section creating means for creating replacement program information sections from the program information sections detected by the program information section detecting means;
program information section replacing means in which program information sections for one or plural programs to be replaced in a program information stream of its own station are replaced by the replacement program information sections; and
program information section sending means for repeatedly sending program information sections after replacement by the program information section replacing means to create a program information stream of its own station,
wherein a program information stream is received from a sharing station, and program information sections of one or plural programs to be replaced, created from program information of its own station are replaced by the replacement program information sections.

5. The broadcast transmitting apparatus according to claim 4, wherein replacement targets in the program information stream are pfEIT, which is time-series data on present and next programs.

6. The broadcast transmitting apparatus according to claim 1, in place of the program information stream replacing means, comprising:
program information stream acquiring means for receiving a program information stream from other sharing stations;
program information packet detecting means for extracting program information packets for replacing from the program information stream acquired by the program information stream acquiring means;
replacement program information packet creating means for creating replacement program information packets from the program information packets detected by the program information packet detecting means;
program information section sending means for repeatedly sending program information sections of its own station received from the program information section creating means to create a program information stream of its own station; and
program information packet replacing means in which program information packets for one or plural programs to be replaced in a program information stream of its own station are replaced by the contents of replacement program information;
wherein a program information stream is received from a sharing station to replace the contents of program information packets constituting the program information stream.

7. The broadcast transmitting apparatus according to claim 6, wherein replacement targets in the program information packet are pfEIT, which is time-series data on present and next programs.

8. The broadcast transmitting apparatus according to claim 4, wherein the program information stream replacing means specifies broadcast time of a replacement program to replace a program to be replaced in the program information stream.

9. The broadcast transmitting apparatus according to claim 6, wherein the program information packet replacing means specifies broadcast time of a replacement program to replace a program to be replaced in the program information stream.

10. The broadcast transmitting apparatus according to claim 8, wherein the program information stream replacing means specifies broadcast time of a replacement program to make replacement by the replacement program if broadcast time of a program in the program information stream is identical with or within broadcast time of the replacement program.

11. The broadcast transmitting apparatus according to claim 9, wherein the program information packet replacing means specifies broadcast time of a replacement program to make replacement by the replacement program if broadcast time of a program in the program information stream is identical with or within broadcast time of the replacement program.

12. The broadcast transmitting apparatus according to claim 4, wherein the program information stream replacing means specifies the identifier of a program to be replaced to replace a relevant program in the program information stream.

13. The broadcast transmitting apparatus according to claim 6, wherein the program information packet replacing means specifies the identifier of a program to be replaced to replace a relevant program in the program information stream.

14. The broadcast transmitting apparatus according to claim 1, in place of the program information stream replacing means, including the program information section replacing means comprising:
program information section acquiring means for receiving program information sections from sharing stations, and program information section detecting means for detecting program information sections to be replaced from the program information sections;
replacement program information section creating means for creating replacement program information sections;
program information section replacing means in which program information sections for one or plural programs to be replaced in the program information sections are replaced by the replacement program information sections; and
program information section sending means for repeatedly sending program information sections after replacement by the program information section replacing means to create a program information stream,
wherein program information sections are received from a sharing station, and program information sections of one or plural programs to be replaced, created from program information of its own station are replaced by the replacement program information sections.

15. The broadcast transmitting apparatus according to claim 14, wherein replacement targets in the program information stream are schedule EIT, which is time-series data on present and next programs.

16. The broadcast transmitting apparatus according to claim 4, including switching means for transmitting a switching signal to a sharing station to replace program information sections, and replacing program information sections according to the switching signal.

17. The broadcast transmitting apparatus according to claim 6, including switching means for transmitting a switching signal to a sharing station to replace program information sections, and replacing program information sections according to the switching signal.

18. The broadcast transmitting apparatus according to claim 4, wherein the replacement program information section creating means creates program information sections so as to conform to attributes specific to each sharing station.

19. The broadcast transmitting apparatus according to claim 6, wherein the replacement program information packet creating means creates program information packets so as to conform to attributes specific to each sharing station.
